# EUROPEAN PATENT APPLICATION

(11) **EP 3 470 994 A1**
(43) Date of publication of application: **17.04.2019**
(21) Application number: 16904520.0
(22) Date of filing: 29.12.2016
(51) Int. Cl.: G06F 17/30

(54) **SLIDE PLAYBACK CONTROL METHOD AND APPARATUS**

(30) Priority: 08.06.2016 CN 201610407867
(71) Applicant: Guangzhou Shirui Electronics Co., Ltd., Guangzhou, Guangdong 510663 (CN)
(72) Inventor: WANG, Dongjie, Guangzhou Guangdong 510663 (CN)
(74) Representative: Appleyard Lees IP LLP
(86) International application number: PCT/CN2016/113223
(87) International publication number: WO 2017/211072

(57) **Abstract**

Provided are a slide show control method and an apparatus. The method includes: displaying (S102) a control interface in a slide show interface, receiving (S104) a switch instruction acting on a thumbnail, and in response to the switch instruction, obtaining (S106) the slide page corresponding to the thumbnail on which the switch instruction acts and switching the slide page currently displayed in the slide show interface to the slide page corresponding to the thumbnail on which the switch instruction acts. With the control interface displayed in the slide show interface, after the user inputs the switch instruction on the thumbnail in the control interface, the slide page currently displayed in the slide show interface can be automatically switched to the slide page corresponding to the thumbnail on which the switch instruction acts. And even when a touch device is used to present the slides, the page switch can be done in the show state, which simplifies the user's operation.

## Description

### TECHNICAL FIELD

The present disclosure relates to the field of multimedia display technologies and, in particular to a slide show control method and apparatus.

### BACKGROUND

In the daily work, study and technical exchanges, a user usually uses slides
(such as PPT) as the form to explain and present a file in a vivid, convenient and
organized way. Slide files are widely used on occasions of academic reporting, thesis defense and business meetings etc. Using a slide file can help the speaker clearly and vividly express his thoughts or ideas.

Because the interaction with PPT is designed based on the traditional keyboard and mouse, using a touch device to present a PPT file is very inconvenient. When PPT is in the show state, to apply show controls on the PPT, one can only long press the screen to popup the right-click menu and then make selections in the menu. Such operation is very inconvenient.

### SUMMARY

Based on that, to solve the above-identified technical problems, it is necessary to provide a slide show control method and apparatus that can simplify the user's operation when a touch device is used to present slides.

A slide show control method includes the following steps:
displaying a control interface in a slide show interface, where a thumbnail corresponding to a slide page is displayed in the control interface;
receiving a switch instruction acting on the thumbnail;
And in response to the switch instruction, obtaining the slide page corresponding to the thumbnail on which the switch instruction acts, and switching a slide page currently displayed in the slide show interface to the slide page corresponding to the thumbnail on which the switch instruction acts.

A slide show control apparatus is provided, which includes:
an interface displaying module, configured to display a control interface in a slide show interface, where a thumbnail corresponding to a slide page is displayed in the control interface; an instruction obtaining module, configured to receive a switch instruction acting on the thumbnail; and a page switching module, configured to, in response to the switch instruction, obtain the slide page corresponding to the thumbnail on which the switch instruction acts, and switch a slide page currently displayed in the slide show interface to the slide page corresponding to the thumbnail on which the switch instruction acts.

With the above slide show control method and apparatus, the control interface is displayed in the slide show interface, and the switch instruction acting on the thumbnail is received. In response to the switch instruction, the slide page corresponding to the thumbnail on which the switch instruction acts is obtained, and the slide page currently displayed in the slide show interface is switched to the slide page corresponding to the thumbnail on which the switch instruction acts. With the control interface displayed in the slide show interface, after the user inputs the switch instruction on the thumbnail in the control interface, the slide page currently displayed in the slide show interface can be automatically switched to the slide page corresponding to the thumbnail on which the switch instruction acts. And even when a touch device is used to present the slides, the page switch can be done in the show state, which simplifies the user's operation.

### BRIEF DESCRIPTION OF DRAWINGS

FIG. 1 is a flow chart of a slide show control method according to an embodiment;
FIG. 2 is a flow chart of a slide show control method according to another embodiment;
FIG. 3 is a schematic diagram of a control interface in an embodiment;
FIG. 4 is a schematic diagram of an interface with an enlarged view according to an embodiment;
FIG. 5 is a schematic diagram of a writing interface according to an embodiment;
FIG. 6 is a schematic diagram of a structure of a slide show control apparatus according to an embodiment; and
FIG. 7 is a schematic diagram of a structure of a slide show control apparatus according to another embodiment.

### DESCRIPTION OF EMBODIMENTS

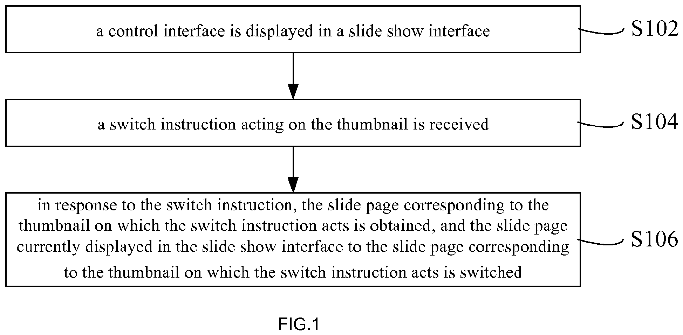

A slide show control method in an embodiment is illustrated by being applied to an intelligent terminal having a slide show function. As shown in FIG. 1, the above method includes the following steps:
In step S102: a control interface is displayed in a slide show interface.

A thumbnail corresponding to a slide page is displayed in the control interface. The slide show interface refers to an interface for showing slides, which can be displayed in the screen of the intelligent terminal in a full-screen manner or displayed in a window. A slide is a file which is made out of text and pictures with some special and dynamic display effects added and can be showed. Specifically, the file format of a slide show can include, for example, PowerPoint, Keynote, Pages and Numbers, etc. The thumbnail is linked to the corresponding slide page, and acts as a preview and a catalog of an image file. The specific number of thumbnails corresponds to the number of pages of the slides. The thumbnail is obtained by taking a screenshot of the slide page, either before or after a slide show event is triggered. In this embodiment, the thumbnails are obtained by taking screenshots of the slide pages after a slide show event is triggered, and are displayed in the control interface and correspond to the respective slide pages. The thumbnails are generated during the slide show, avoiding the waste of programs. In addition, when the number of thumbnails is more than one, the thumbnails can be combined according to the presentation order of the slide pages and then displayed in the control interface in the form of a thumbnail list.

The control interface can be displayed in the slide show interface, either when the slide is detected as being in the show state, or when the slide is detected as being in the show state and a start instruction is received. Specifically, the start instruction can be input either by a touch operation in the slide show interface, such as a click or slide operation with a finger, or by clicking a mouse. Taking the touch operation as an example, when the slide is in the show state, if a user's touch operation in the slide show interface is detected, then the control interface is displayed in the slide show interface, so that the user can have control over the slide show.

Specifically, by monitoring the slide state, when the slide is detected as being in the show state, a slide show event is triggered and the control interface is displayed in the slide show interface. The control interface can be displayed either in the full-screen manner or in a partial area of the slide show interface. The specific way of monitoring the slide state is not unique, which can either be directly monitoring the parameter change of a slide control program to confirm the slide state, or be monitoring the state of the background program in the intelligent terminal to confirm the slide state, or be monitoring the slide state through a third-party component.

Upon the confirmation of the slide show event being triggered, the thumbnails can be displayed in the control interface at the same time when the control interface is displayed in the slide show interface, or, with the control interface being displayed, the thumbnails are displayed after a triggering instruction is received. For example, the thumbnails are displayed after the user's click operation on the control interface is received. Specifically, a page number display box is displayed in the control interface, and step S102 includes: the control interface is displayed in the slide show interface, and the thumbnails are displayed in the control interface after a click instruction acting on the page number display box in the control interface is received. Specifically, the click instruction can either be an instruction produced by a touch operation, such as an instruction produced by the user clicking the page number display box with a finger or a stylus, or be an instruction produced by clicking the page number display box with the mouse arrow. The page number display box displaying the page number of the slide can be set in the control interface at first, specifically the page number display box can be displayed on one or more sides of the control interface. In this embodiment, the page number display box is displayed on two opposite sides of the control interface, and the thumbnails are then displayed after the click instruction acting on the page number display box is received. When the slides are shown, the user can choose according to actual situation whether to display the thumbnails for assisting the page switch operation or not, thereby improving the convenience of the slide show operation.

In step S104: a switch instruction acting on the thumbnail is received.

The switch instruction is used to select a thumbnail so as to switch to the corresponding slide for display. The way of inputting the switch instruction is not unique. Specifically, the switch instruction can either be produced by a touch operation, such as clicking the thumbnail with a finger or a stylus to input the switch instruction, or be input by clicking the mouse.

In step S106: in response to the switch instruction, the slide page corresponding to the thumbnail on which the switch instruction acts is obtained, and the slide page currently displayed in the slide show interface to the slide page corresponding to the thumbnail on which the switch instruction acts is switched.

In this embodiment, after the switch instruction is received, the thumbnail on which the switch instruction acts is obtained, and the slide page currently displayed in the slide show interface is switched to the thumbnail on which the switch instruction acts. With a thumbnail display function added in the show state, the user can view the slide content via the thumbnail, and a page jump operation can be swiftly completed by clicking the thumbnail corresponding to the page to be jumped to.

In the above slide show control method, the control interface is displayed in the slide show interface. After the user inputs the switch instruction on the thumbnail in the control interface, the slide page currently displayed in the slide show interface can be automatically switched to the slide page corresponding to the thumbnail on which the switch instruction acts. And even when a touch device is used to present the slides, the page switch can also be done in the show state, thereby simplifying the user's operation.

In one of embodiments, the control interface is further set with a page-turning button. The above method can also include the following steps:

A page-turning instruction acting on the page-turning button in the control interface is received, and a page-turning operation on the slide page is conducted according to the page-turning instruction.

The page-turning button(s) can be displayed on one or more sides of the control interface, and the page-turning instruction can also be generated by a touch operation or by clicking the mouse. With a page-turning function added on the basis of the thumbnail display function, the user can make choices according to actual demand. For example, clicking the thumbnail when the page jump and switch is needed, and clicking the page-turning button when the page turning is needed, which improves the convenience of the slide show operation.

Specifically, in this embodiment, the page-turning buttons are displayed on two opposite sides of the control interface for ease of the user's page-turning operation. Specifically, the page-turning buttons include a page-up button and a page-down button, which are set on the two sides of the page number display box, respectively. The user can turn the slide page upward and downward by clicking the page-up button and the page-down button, further improving the convenience of the slide show operation.

Further, the above method includes the following steps:

When a slide page switch is detected, the page number of the currently displayed slide page is obtained and this page number is displayed in the page number display box in the control interface.

Similarly, the slide state can be either confirmed by directly monitoring the parameter change of the slide control program, or monitored through a third-party component. When the user switches the page by clicking the thumbnail, or turns over the page through the page turning function, the presented slide page change being detected triggers a slide switch event, and the page number of the currently displayed slide page is obtained and displayed in the page number display box to have the page number updated.

A page number update function is provided in this embodiment. When the slide page is switched, the page number is automatically updated and displayed for the user to view, which improves the convenience of the slide show operation.

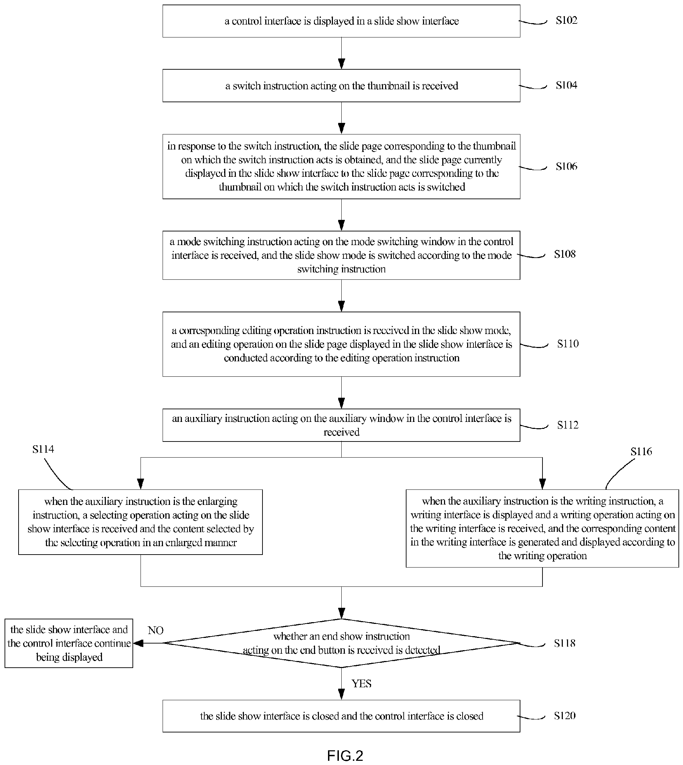

In one of embodiments, a mode switching window is further displayed in the control interface. As shown in FIG. 2, the above method further includes steps S108 and S110.

In step S108: a mode switching instruction acting on the mode switching window in the control interface is received, and the slide show mode is switched according to the mode switching instruction.

It should be noted that step S108 can either be before step S104 or be after step S104. The way of inputting the mode switching instruction is not unique, which similarly can be generated either by a touch operation or by clicking the mouse. The mode switching window can be set in the control interface, the mode switching instruction acting on the mode switching window is obtained and the slide show mode is switched correspondingly. Specifically, the slide show mode includes at least one of a selecting mode, a commenting mode, and an erasing mode, thus the mode switching window is correspondingly set with at least one of a selecting button, a commenting button, and an erasing button. The user can realize the switch of the slide show mode by clicking the corresponding button.

In step S110: a corresponding editing operation instruction is received in the slide show mode, and an editing operation on the slide page displayed in the slide show interface is conducted according to the editing operation instruction.

The types of the editing operation instructions received in different slide show modes can be different, and the specific ways of conducting the editing operations on the slide page according to the editing operation instructions can also be different accordingly.

Steps S108 and S110 further provide a slide show mode switch function, with which the user can choose different show modes according to the requirements of the slide show and conduct related operations, which improve the convenience of the slide show operation.

Similarly, taking the slide show mode including at least one of the selecting mode, the commenting mode and the erasing mode as an example, step S110 specifically can include the steps 1-3.

In step 1: when the slide show mode is the selecting mode, a selecting operation acting on the slide show interface is received, and the content corresponding to the selecting operation is prominently displayed in the slide show interface.

The selecting operation can also be a touch operation or a mouse click operation. Taking the touch operation as an example, when the selecting mode is entered after the user clicks the selecting button, the touch operation can be conducted in the slide show interface with a finger to select the relevant content for prominently displaying. Prominently displaying refers to displaying the selected content differently from the other content. The selected content can include text, images and tables, etc. Taking the text as an example, after the text corresponding to the selecting operation is obtained, the text can be displayed either by highlighting, or in a preset color, or with an underline added, etc., so as to make the selected text displayed differently from the unselected content.

In step 2: when the slide show mode is the commenting mode, a commenting operation acting on the slide show interface is received, and the commenting content in the slide show interface is generated and displayed according to the commenting operation. The commenting operation can also be a touch operation or a mouse click operation. Taking the touch operation as an example, when the commenting mode is entered after the user clicks the commenting button, a writing operation can be conducted in the slide show interface with a finger, which specifically can be adding text and drawing, etc.

In step 3: when the slide show mode is the erasing mode, an erasing operation acting on the slide show interface is received, and the content corresponding to the erasing operation in the slide show interface is erased.

The erasing operation can also be a touch operation or a mouse click operation. Taking the touch operation as an example, when the erasing mode is entered after the user clicks the erasing button, the erasing operation can be conducted in the slide show interface with a finger, to erase the handwriting written in the commenting mode.

The user can choose from the selecting mode, the commenting mode and the erasing mode according to the requirements of the slide show and conduct related operations. It is understandable that the slide show modes and the corresponding manners of editing and operating are not limited to the above three types. For example, it is also applicable to conduct adding, deleting and replacing operations and the like on the slide page in a revising mode.

In one of embodiments, an auxiliary window is further displayed in the control interface. Still referring to FIG. 2, the above method further includes steps S112-S116.

In step S112: an auxiliary instruction acting on the auxiliary window in the control interface is received.

It should be noted that step S112 can either be before step S104 or be after step S104. The way of inputting the auxiliary instruction is not unique, which similarly can be produced by a touch operation or by clicking the mouse. The auxiliary window can be set in the control interface, and the auxiliary instruction acting on the auxiliary window is obtained and the type of the auxiliary instruction is confirmed. Specifically, the auxiliary instruction includes an enlarging instruction and/or a writing instruction. The auxiliary window is correspondingly set with an enlarging button and/or a writing button. The user can input the auxiliary instruction of a corresponding type by clicking the corresponding button.

In step S114: when the auxiliary instruction is the enlarging instruction, a selecting operation acting on the slide show interface is received and the content selected by the selecting operation in an enlarged manner.

The selecting operation is also a touch operation or a mouse click operation. Taking the touch operation as an example, when an amplifier function is triggered after the user clicks the enlarging button, the touch operation can be conducted in the slide show interface with a finger to select the relevant content for displaying in the enlarged manner. Displaying in the enlarged manner refers to conducting enlarging processing on the selected content and then displaying the enlarged content. The selected content can include text, pictures and tables, etc. Enlarging a local area in the process of presenting the slide can make it more prominent and visible for viewing.

In step S116: when the auxiliary instruction is the writing instruction, a writing interface is displayed and a writing operation acting on the writing interface is received, and the corresponding content in the writing interface is generated and displayed according to the writing operation. The writing operation is also a touch operation or a mouse click operation. Taking the touch operation as an example, when the user clicks the writing button, a panel-in-panel function is triggered and the writing interface pops up. The user can conduct the writing operation with a finger in the writing interface to generate the corresponding content for displaying. In the process of presenting the slide, a blank area for writing can be rapidly expanded to allow the user to write, which improves the convenience of the slide show operation.

The writing operation can either be directly conducted after the writing interface is displayed, or be conducted in the writing interface after the writing interface is displayed and the commenting button is clicked. In this embodiment, displaying the writing interface and receiving the writing operation acting on the writing interface in step S116 includes: the writing interface is displayed, and the writing operation acting on the writing interface is received after a click operation acting on the commenting button is received. With starting conditions being set for the writing function, the writing interface is displayed after the writing instruction is inputted, and the writing operation is obtained after the click operation acting on the commenting button is received, which avoids the misoperation and improves the reliability of the slide show operation.

Steps S112-S116 further provide a slide show auxiliary function. The user can conduct the enlarging or writing operation according to the requirements of the slide show, which improves the convenience of the slide show operation.

Further, in one of embodiments, the method includes the steps corresponding to both the slide show mode switch function and the slide show auxiliary function. The mode switching window and the auxiliary window in the control interface can be set to be displayed or hidden in the same window. An auxiliary button is further set in the control interface, and the displaying and hiding of the selecting button, the commenting button, the erasing button, the enlarging button, and the writing button are controlled by receiving the instruction acting on the auxiliary button. When there is no need to perform the slide show mode switch function and the slide show auxiliary function, the user can hide relevant buttons by clicking the auxiliary button for ease of viewing the slide show.

In one of embodiments, the control interface is further set with an end button. The method further includes steps S118 and S120.

In step S118: whether an end show instruction acting on the end button is received is detected.

It should be noted that step S118 can either be before step S104 or be after step S104. The way of inputting the end show instruction is not unique, which similarly can be produced by a touch operation or by clicking the mouse. With the end button set in the control interface, the user can input the end show instruction by clicking the end button. If the end show instruction acting on the end button is received, step S120 is executed, otherwise the slide show interface and the control interface continue being displayed.

In step S120: the slide show interface is closed and the control interface is closed.

After the end show instruction is received, the slide show interface is closed to exit the slide show state. At the same time, the exit of the slide show state being detected triggers a slide show end event, and the control interface is closed. Similarly, the slide state can be either confirmed by directly monitoring the parameter change of the slide control program, or monitored through a third-party component.

Steps S118 and S120 provide a slide show end control function. The user can input the end show instruction to exit the slide show state, closing the control interface while closing the slide show interface, so that the control interface is displayed only in the slide show state, thus not affecting the other operations of the user and further improving the convenience of the slide show operation.

In one embodiment, the slide show control method includes the steps corresponding to the thumbnail display function, the page-turning function, the page number update function, the slide show mode switch function, the slide show auxiliary function and the slide show end control function. It should be noted that all of these functions can be conducted simultaneously or not, and there is no particular sequence among them.

The above slide show control method will be further explained below in combination with specific implementations.

The slide includes PowerPoint, Keynote, and Pages. This specific implementation takes PowerPoint (PPT) as an example, the monitoring and controlling of the PPT show state can be realized by invoking a COM component (with the dynamic-link library file:
Microsoft.Office.lnterop.PowerPoint.dll), and auxiliary functions can be added on the basis of the original PPT show, enabling a more convenient operation on the PPT. Through an auxiliary tool, the COM component is initialized and an instance of PPT is created, and the events in the COM component are subscribed to, including: a start show event, a page switch event, and an end show event.

The start show event is monitored through an interface of the start show event. The auxiliary tool will be informed of the starting of the PPT show through this event. The interface of the start show event specifically is:
Microsoft.Office.Interop.PowerPoint.Application.SlideShowBegin(Sli deShowWindow wn).

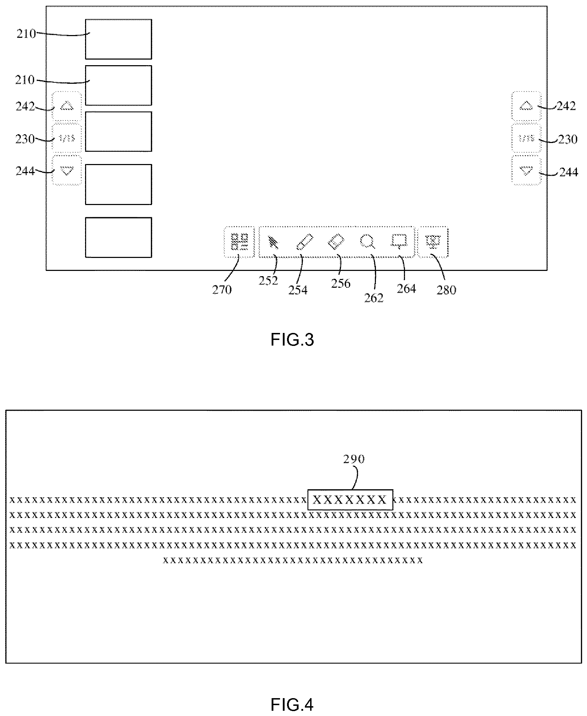

After the start show event is detected, the auxiliary tool displays the control interface in the PPT show interface in the full-screen manner. As shown in FIG. 3, thumbnails 210 are displayed in the control interface, and the middle blank area is used to display the PPT page. Page number display boxes 230 and page-turning buttons are set on both left and right sides of the control interface. The page-turning buttons include a page-up button 242 and a page-down button 244. The page number display box 230 is located between the page-up button 242 and the page-down button 244. After a slide show event is triggered, screenshots of the PPT pages are taken and stored locally, and are loaded into the auxiliary tool after links with the corresponding PPT pages are established. The interface for taking a screenshot of the PPT is:
SlideShowWindow.Presentation.Export(stringPath,stringFilterName, intScaleWidth,int ScaleHeight).

The page number of the current PPT page is displayed in the page number display box 230, and the thumbnails 210 are displayed when the page number display box 230 is clicked. The user can click the thumbnails 210 for conducting the page jumping operation, and can also click the page-up button 242 and the page-down button 244 for conducting the page turning operation. The interface for page-up turning is: SlideShowWindow.View.Previous(), and the interface for page-down turning is: SlideShowWindow.View.Next().

The control interface is set with a selecting button 252, a commenting button 254, an erasing button 256, an enlarging button 262 and a writing button 264, an auxiliary button 270 and an end button 280. The displaying and hiding of the selecting button 252, the commenting button 254, the erasing button 256, the enlarging button 262 and the writing button 264 can be controlled by clicking the auxiliary button 270. The PPT show interface is closed by clicking the end button 280 to exit the presentation mode. The interface for exiting the presentation mode is: SlideShowWindow.View.Exit().

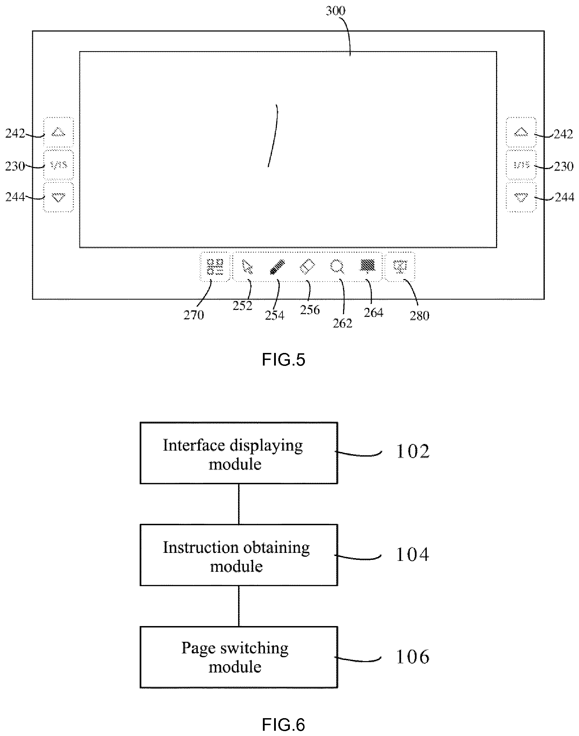

By clicking the selecting button 252, the commenting button 254 and the erasing button 256, the user can switch the current mode of PPT, for example, the selecting mode, the commenting mode and the erasing mode. The interface for switching the current mode of PPT is:
SlideShowWindow.View.PointerType. In the commenting mode, the user can conduct the writing operation on PPT, and in the erasing mode, the user can erase the handwriting. By clicking the enlarging button 262 and the writing button 264, the user can use an amplifier function and a panel-in-panel function to display the presentation content in the enlarged manner or to display a writing interface for writing by the user. As shown in FIG. 4, when the amplifier function is used, an enlarging box 290 pops up to display the enlarged content. As shown in FIG. 5, a writing interface 300 is displayed after the user clicks the writing button 264, and the writing operation can be conducted after the user clicks the commenting button 254.

The page switch event is monitored by an interface of the page switch event, and the auxiliary tool is informed of the page switch of PPT through this event. The interface of the page switch event is:
Microsoft.Office.Interop.PowerPoint.Application.SlideShowNextSlid e(SlideShowWindow wn).

After the page switch of PPT is detected, the auxiliary tool obtains the page number of the current PPT page, and updates the page number in the page number display boxes 230 on the left and right sides. The interface for obtaining the current page number of PPT is:
SlideShowWindow.View.CurrentShowPosition.

The end show event is monitored through an interface of the end show event, and the auxiliary tool is informed of the end of the PPT show through this event. The interface of the end show event is:
Microsoft.Office.Interop.PowerPoint.Application.SlideShowEnd(Pres entationpres).

After the auxiliary tool receives the end show event, the control interface is closed so as not to affect the other operations of the user, reaching the goal of the control interface being displayed only in the PPT show state.

A slide show control apparatus in an embodiment is illustrated by being applied to an intelligent terminal having a slide show function. As shown in FIG. 6, the apparatus includes an interface displaying module 102, an instruction obtaining module 104, and a page switching module 106.

The interface displaying module 102 is configured to display a control interface in a slide show interface.

A thumbnail corresponding to a slide page is displayed in the control interface. The slide show interface refers to an interface for showing slides, which can be displayed in the screen of the intelligent terminal in a full-screen manner or displayed in a window. The thumbnail is linked to the corresponding slide page, and acts as a preview and a catalog of an image file. The specific number of thumbnails corresponds to the number of pages of the slides. In this embodiment, the thumbnails are obtained by taking screenshots of the slide pages after a slide show event is triggered, and are displayed in the control interface and correspond to the respective slide pages. The thumbnails are generated during the slide show, avoiding the waste of programs. In addition, when the number of thumbnails is more than one, the thumbnails can be combined according to the presentation order of the slide pages and then displayed in the control interface in the form of a thumbnail list.

The control interface can be displayed in the slide show interface, either when the slide is detected as being in the show state, or when the slide is detected as being in the show state and a start instruction is received. Taking a touch operation as an example, when the slide is in the show state, if a user's touch operation in the slide show interface is detected, then the control interface is displayed in the slide show interface, so that the user can have control over the slide show.

Specifically, by monitoring the slide state, when the slide is detected as being in the show state, a slide show event is triggered and the control interface is displayed in the slide show interface. Specifically, a page number display box is displayed in the control interface, and the interface displaying module 102 displaying the control interface in the slide show interface includes: the control interface in the slide show interface is displayed, and the thumbnails in the control interface is displayed after a click instruction acting on the page number display box in the control interface is received. The page number display box displaying the page number of the slide can be set in the control interface at first, specifically the page number display box can be displayed on one or more sides of the control interface. The thumbnails are displayed after the click instruction acting on the page number display box is received. When showing the slides, the user can choose according to actual situation whether to display the thumbnails for assisting the page switch operation or not, thereby improving the convenience of the slide show operation.

The instruction obtaining module 104 is configured to receive a switch instruction acting on the thumbnail.

The switch instruction is used to select a thumbnail so as to switch to the corresponding slide for display. The way of inputting the switch instruction is not unique. Specifically, the switch instruction can either be produced by a touch operation, such as clicking the thumbnail with a finger or a stylus to input the switch instruction, or be input by clicking the mouse.

The page switching module 106 is configured to, in response to the switch instruction, obtain the slide page corresponding to the thumbnail on which the switch instruction acts, and switch the slide page currently displayed in the slide show interface to the slide page corresponding to the thumbnail on which the switch instruction acts.

In this embodiment, after the switch instruction is received, the thumbnail on which the switch instruction acts is obtained, and the slide page currently displayed in the slide show interface is switched to the thumbnail on which the switch instruction acts. With a thumbnail display function added in the show state, the user can view the slide content via the thumbnail, and a page jump operation can be swiftly completed by clicking the thumbnail corresponding to the page to be jumped to.

With the above slide show control apparatus, the control interface is displayed in the slide show interface. After the user inputs the switch instruction on the thumbnail in the control interface, the slide page currently displayed in the slide show interface can be automatically switched to the slide page corresponding to the thumbnail on which the switch instruction acts. And even when a touch device is used to present the slides, the page switch can be done in the show state, thereby simplifying the user's operation.

In one of embodiments, the control interface is further set with a page-turning button. The apparatus further includes a page-turning operation module, which is configured to receive a page-turning instruction acting on the page-turning button in the control interface and to conduct the page-turning operation on the slide page according to the page-turning instruction.

With a page-turning function added on the basis of the thumbnail display function, the user can make choices according to actual demand. For example, clicking the thumbnail when the page jump and switch is needed, and clicking the page-turning button when the page turning is needed, which improves the convenience of the slide show operation.

Further, the apparatus further includes a page number updating module, which is configured to, when a slide page switch is detected, obtain the page number of the currently displayed slide page and to display this page number in the page number display box in the control interface.

When the user switches the page by clicking the thumbnail, or turns over the page through the page turning function, the presented slide page change being detected triggers a slide switch event, and the page number of the currently displayed slide page is obtained and displayed in the page number display box to have the page number updated.

A page number update function is provided in this embodiment. When the slide page is switched, the page number is automatically updated and displayed for the user to view, which improves the convenience of the slide show operation

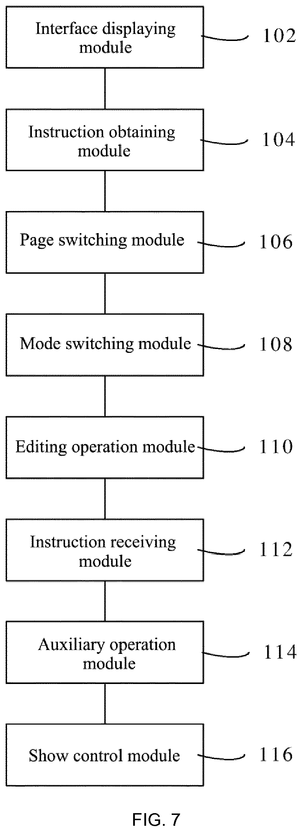

In one of embodiments, a mode switching window is further displayed in the control interface. As shown in FIG. 7, the apparatus further includes a mode switching module 108 and an editing operation module 110.

The mode switching module 108 is configured to receive a mode switching instruction acting on the mode switching window in the control interface, and switch the slide show mode according to the mode switching instruction.

The mode switching window can be set in the control interface, the mode switching instruction acting on the mode switching window is obtained and the slide show mode is switched correspondingly. Specifically, the slide show mode includes at least one of a selecting mode, a commenting mode, and an erasing mode, thus the mode switching window is correspondingly set with at least one of a selecting button, a commenting button, and an erasing button. The user can realize the switch of the slide show mode by clicking the corresponding button.

The editing operation module 110 is configured to receive a corresponding editing operation instruction in the slide show mode, and conduct an editing operation on the slide page displayed in the slide show interface according to the editing operation instruction.

The types of the editing operation instructions received in different slide show modes can be different, and the specific ways of conducting the editing operations on the slide page according to the editing operation instructions can also be different accordingly.

The mode switching module 108 and the editing operation module 110 further provide a slide show mode switch function, with which the user can choose different show modes according to the requirements of the slide show and conduct related operations, which improve the convenience of the slide show operation.

Similarly, taking the slide show mode including at least one of the selecting mode, the commenting mode and the erasing mode as an example, the editing operation module 110 can include at least one of a selecting operation module, a commenting operation module and an erasing operation module.

The selecting operation module is configured to, when the slide show mode is the selecting mode, receive a selecting operation acting on the slide show interface, and prominently display the content corresponding to the selecting operation in the slide show interface.

The selecting operation can also be a touch operation or a mouse click operation. Taking the touch operation as an example, when the selecting mode is entered after the user clicks the selecting button, the touch operation can be conducted in the slide show interface with a finger to select the relevant content for prominently displaying. Prominently displaying refers to displaying the selected content differently from the other content. The selected content can include text, images and tables, etc.

The commenting operation module is configured to, when the slide show mode is the commenting mode, receive a commenting operation acting on the slide show interface, and generate and display the commenting content in the slide show interface according to the commenting operation.

The commenting operation can also be a touch operation or a mouse click operation. Taking the touch operation as an example, when the commenting mode is entered after the user clicks the commenting button, a writing operation can be conducted in the slide show interface with a finger, which specifically can be adding text and drawing, etc.

The erasing operation module is configured to, when the slide show mode is the erasing mode, receive an erasing operation acting on the slide show interface, and erase the content corresponding to the erasing operation in the slide show interface.

The erasing operation can also be a touch operation or a mouse click operation. Taking the touch operation as an example, when the erasing mode is entered after the user clicks the erasing button, the erasing operation can be conducted in the slide show interface with a finger, to erase the handwriting written in the commenting mode.

The user can choose from the selecting mode, the commenting mode and the erasing mode according to the requirements of the slide show and conduct related operations. It is understandable that the slide show modes and the corresponding manners of editing and operating are not limited to the above three types. For example, it is also applicable to conduct adding, deleting and replacing operations and the like on the slide page in a revising mode.

In one of embodiments, an auxiliary window is further displayed in the control interface. Still referring to FIG. 7, the apparatus further includes an instruction receiving module 112 and an auxiliary operation module 114.

The instruction receiving module 112 is configured to receive an auxiliary instruction acting on the auxiliary window in the control interface.

The auxiliary window can be set in the control interface, and the auxiliary instruction acting on the auxiliary window is obtained and the type of the auxiliary instruction is confirmed. Specifically, the auxiliary instruction includes an enlarging instruction and/or a writing instruction. The auxiliary window is correspondingly set with an enlarging button and/or a writing button. The user can input the auxiliary instruction of a corresponding type by clicking the corresponding button.

The auxiliary operation module 114 is configured to, when the auxiliary instruction is the enlarging instruction, receive a selecting operation acting on the slide show interface and display the content selected by the selecting operation in an enlarged manner; when the auxiliary instruction is the writing instruction, display a writing interface and receive a writing operation acting on the writing interface, and generate and display the corresponding content in the writing interface according to the writing operation.

Displaying in the enlarged manner refers to conducting enlarging processing on the selected content and then displaying the enlarged content. The selected content can include text, pictures and tables, etc. Enlarging a local area in the process of presenting the slide can make it more prominent and visible for viewing. When the user clicks the writing button, a panel-in-panel function is triggered and the writing interface pops up. The user can conduct the writing operation with a finger in the writing interface to generate the corresponding content for displaying. In the process of presenting the slide, a blank area for writing can be rapidly expanded to allow the user to write, which improves the convenience of the slide show operation.

In this embodiment, the auxiliary operation module 114 displaying the writing interface and receiving the writing operation acting on the writing interface, includes: the writing interface is displayed, and the writing operation acting on the writing interface is received after a click operation acting on the commenting button is received. With starting conditions being set for the writing function, the writing interface is displayed after the writing instruction is inputted, and the writing operation is obtained after the click operation acting on the commenting button is received, which avoids the misoperation and improves the reliability of the slide show operation.

The instruction receiving module 112 and the auxiliary operation module 114 further provide a slide show auxiliary function. The user can conduct the enlarging or writing operation according to the requirements of the slide show, which improves the convenience of the slide show operation.

Further, the mode switching window and the auxiliary window in the control interface can be set to be displayed or hidden in the same window. An auxiliary button is further set in the control interface, and the displaying and hiding of the selecting button, the commenting button, the erasing button, the enlarging button and the writing button are controlled by receiving the instruction acting on the auxiliary button. When there is no need to perform the slide show mode switch function and the slide show auxiliary function, the user can hide relevant buttons by clicking the auxiliary button for ease of viewing the slide show.

In one of embodiments, the control interface is further set with an end button. The apparatus further includes a show control module 116.

The show control module 116 is configured to detect whether an end show instruction acting on the end button is received, and if yes, close the slide show interface and close the control interface.

With the end button set in the control interface, the user can input the end show instruction by clicking the end button. If the end show instruction acting on the end button is received, the slide show interface and the control interface are closed, otherwise the slide show interface and the control interface continue being displayed. After the end show instruction is received, the slide show interface is closed to exit the slide show state. At the same time, the exit of the slide show state being detected triggers a slide show end event and the control interface is closed. Similarly, the slide state can be either confirmed by directly monitoring the parameter change of a slide control program, or monitored through a third-party component.

In this embodiment, a slide show end control function is provided. The user can input the end show instruction to exit the slide show state, closing the control interface while closing the slide show interface, so that the control interface is displayed only in the slide show state, thus not affecting the other operations of the user and further improving the convenience of the slide show operation.

The foregoing implementations are merely specific embodiments of the present disclosure, and are not intended to limit the protection scope of the present disclosure. It should be noted that any variation or replacement readily figured out by persons skilled in the art within the technical scope disclosed in the present disclosure shall all fall into the protection scope of the present disclosure. Therefore, the protection scope of the present disclosure shall be object to the protection scope of the claims.

## Claims

1. A slide show control method, comprising the following steps:
displaying a control interface in a slide show interface, wherein a thumbnail corresponding to a slide page is displayed in the control interface;
receiving a switch instruction acting on the thumbnail; and
in response to the switch instruction, obtaining the slide page corresponding to the thumbnail on which the switch instruction acts, and switching a slide page currently displayed in the slide show interface to the slide page corresponding to the thumbnail on which the switch instruction acts.

2. The method according to claim 1, wherein a mode switching window is displayed in the control interface; the method further comprising:
receiving a mode switching instruction acting on the mode switching window in the control interface, and switching a slide show mode according to the mode switching instruction;
receiving a corresponding editing operation instruction in the slide show mode, and conducting an editing operation on the slide page displayed in the slide show interface according to the editing operation instruction.

3. The method according to claim 2, wherein the slide show mode comprises at least one of a selecting mode, a commenting mode, and an erasing mode; the receiving of the corresponding editing operation instruction in the slide show mode, and conducting the editing operation on the slide page displayed in the slide show interface according to the editing operation instruction comprises:
when the slide show mode is the selecting mode, receiving a selecting operation acting on the slide show interface, and prominently displaying a content corresponding to the selecting operation in the slide show interface;
when the slide show mode is the commenting mode, receiving a commenting operation acting on the slide show interface, and generating and displaying a commenting content in the slide show interface according to the commenting operation; and
when the slide show mode is the erasing mode, receiving an erasing operation acting on the slide show interface, and erasing a content corresponding to the erasing operation in the slide show interface.

4. The method according to claim 2, wherein an auxiliary window is displayed in the control interface; the method further comprising:
receiving an auxiliary instruction acting on the auxiliary window in the control interface, the auxiliary instruction comprising an enlarging instruction and/or a writing instruction;
when the auxiliary instruction is the enlarging instruction, receiving a selecting operation acting on the slide show interface, and displaying a content selected by the selecting operation in an enlarged manner; and
when the auxiliary instruction is the writing instruction, displaying a writing interface and receiving a writing operation acting on the writing interface, and generating and displaying a corresponding content in the writing interface according to the writing operation.

5. The method according to claim 4, wherein the mode switching window and the auxiliary window are set to be displayed or hidden in a same window.

6. A slide show control apparatus, comprising:
an interface displaying module configured to display a control interface in a slide show interface, wherein a thumbnail corresponding to a slide page is displayed in the control interface;
an instruction obtaining module configured to receive a switch instruction acting on the thumbnail; and
a page switching module configured to, in response to the switch instruction, obtain the slide page corresponding to the thumbnail on which the switch instruction acts, and switch a slide page currently displayed in the slide show interface to the slide page corresponding to the thumbnail on which the switch instruction acts.

7. The apparatus according to claim 6, wherein a mode switching window is displayed in the control interface; the apparatus further comprising:
a mode switching module, configured to receive a mode switching instruction acting on the mode switching window in the control interface, and switch a slide show mode according to the mode switching instruction; and
an editing operation module, configured to receive a corresponding editing operation instruction in the slide show mode, and conduct an editing operation on the slide page displayed in the slide show interface according to the editing operation instruction.

8. The apparatus according to claim 7, wherein the editing operation module comprises at least one of a selecting operation module, a commenting operation module, and an erasing operation module;
the selecting operation module is configured to, when the slide show mode is a selecting mode, receive a selecting operation acting on the slide show interface, and prominently display a content corresponding to the selecting operation in the slide show interface;
the commenting operation module is configured to, when the slide show mode is a commenting mode, receive a commenting operation acting on the slide show interface, and generate and display a commenting content in the slide show interface according to the commenting operation; and
the erasing operation module is configured to, when the slide show mode is an erasing mode, receive an erasing operation acting on the slide show interface, and erase a content corresponding to the erasing operation in the slide show interface.

9. The apparatus according to claim 6, wherein an auxiliary window is further displayed in the control interface; the apparatus further comprising:
an instruction receiving module, configured to receive an auxiliary instruction acting on the control interface, the auxiliary instruction comprising an enlarging instruction and/or a writing instruction; and
an auxiliary operation module, configured to, when the auxiliary instruction is the enlarging instruction, receive a selecting operation acting on the slide show interface, and display a content selected by the selecting operation in an enlarged manner; when the auxiliary instruction is the writing instruction, display a writing interface and receive a writing operation acting on the writing interface, and generate and display a corresponding content in the writing interface according to the writing operation.

10. The apparatus according to claim 6, wherein an end button is set in the control interface; the apparatus further comprising:
a show control module, configured to, detect whether an end show instruction acting on the end button is received, and if yes, close the slide show interface and close the control interface.
